# EUROPEAN PATENT APPLICATION

(11) **EP 4 239 854 A1**
(43) Date of publication of application: **06.09.2023**
(21) Application number: 21884272.2
(22) Date of filing: 20.01.2021
(51) Int. Cl.: H02K 1/20, H02K 9/19, H02K 3/24

(54) **COOLING STRUCTURE FOR DISC-TYPE MOTOR**

(30) Priority: 30.10.2020 CN 202011195375; 30.10.2020 CN 202011190399
(71) Applicant: Shanghai Pangood Power Technology Co., Ltd., Shanghai 201612 (CN)
(72) Inventor: TANG, Lei, Jinhua, Zhejiang 321102 (CN); LI, Yixiong, Jinhua, Zhejiang 321102 (CN); ZHANG, Guangquan, Jinhua, Zhejiang 321102 (CN); YANG, Wenxiong, Jinhua, Zhejiang 321102 (CN); XIA, Li, Jinhua, Zhejiang 321102 (CN); CHEN, Jinhua, Jinhua, Zhejiang 321102 (CN)
(74) Representative: advotec.
(86) International application number: PCT/CN2021/072814
(87) International publication number: WO 2022/088527

(57) **Abstract**

Disclosed in the present invention is a cooling structure for a disc-type motor, comprising a stator core, a stator shell, a first baffle plate, a second baffle plate, a first coil, a second coil, and a partition plate. The partition plate is provided between the first coil and the second coil. A third cooling channel for communicating a first cavity with a second cavity is formed between adjacent stator units. By means of the cooling structure for the disc-type motor, a liquid refrigerant can make full contact with the stator core, the first coil, the second coil and other core heat production components for heat exchange, such that the heat dissipation efficiency of the disc-type motor is improved, and the service life of the disc-type motor is prolonged.

## Description

The present application claims priorities to Chinese patent application No. 202011195375.X, titled "COOLING STRUCTURE FOR DISC ELECTRIC MOTOR", filed on October 30, 2020, and Chinese patent application No. 202011190399.6, titled "COOLING STRUCTURE FOR DISC ELECTRIC MOTOR", filed on October 30, 2020, which are incorporated herein by reference in their entireties.

### FIELD

The present application relates to the technical field of heat dissipation of a disc electric motor, and in particular to a cooling structure for a disc electric motor.

### BACKGROUND

In order to improve the working efficiency of a disc electric motor, a cooling system is designed for the disc electric motor. There are two cooling systems. One is air cooling, and the other is liquid cooling. The liquid cooling has more efficiency than air cooling. The conventional liquid cooling system mainly runs in an external cooling mode in which coolant contacts indirectly with to-be-cooled parts, and thus has a low cooling efficiency, thereby affecting the service life of the disc electric motor.

Therefore, how to prolong the service life of the disc electric motor has attracted the attention of those skilled in the art.

### SUMMARY

An object of the present application is to provide a cooling structure for a disc electric motor to prolong the service life of the disc electric motor.

In order to achieve the above object, a cooling structure for a disc electric motor is provided according to an embodiment of the present application. The cooling structure includes:
a stator core having multiple stator units;
a stator housing enclosing the stator core, where a first cavity is defined by the stator housing and an outer side of the stator core, a second cavity is defined by the stator housing and an inner side of the stator core, wherein the stator housing is provided with a liquid inlet channel, a liquid outlet channel, a liquid inlet, a liquid outlet, a liquid spray port and a liquid return port, wherein the liquid inlet and the liquid spray port are communicated through the liquid inlet channel, and the liquid outlet and the liquid return port are communicated the liquid outlet channel;
a first baffle and a second baffle arranged between the outer side of the stator core and the stator housing, where the first baffle and the second baffle separate the first cavity into a first cooling channel and a second cooling channel, the first cooling channel is communicated with the liquid outlet, and the second cooling channel is communicated with the liquid return port;
a first coil and a second coil arranged on each of the multiple stator units, where first coils on adjacent ones of the stator units are in a close fit with each other, and second coils on the adjacent stator units are in a close fit with each other; and
a partitioner interposed between the first coil and the second coil, where a third cooling channel, through which the first cavity and the second cavity are communicated, is formed between the adjacent stator units.

In an embodiment of the present application, the partitioner includes a first partitioner and a second partitioner. The first partitioner is arranged at an outer side of the stator unit, and the second partitioner is arranged at an inner side of the stator unit.

In an embodiment of the present application, the first partitioner has a width smaller than a width of the outer side of the stator unit.

In an embodiment of the present application, the first partitioner is fixed on the first coil and the second coil.

In an embodiment of the present application, the second partitioner has a width smaller than a width of the inner side of the stator unit.

In an embodiment of the present application, the second partitioner is fixed on the first coil and the second coil.

In an embodiment of the present application, the stator housing includes an outer stator housing, an inner stator housing, a front stator plate and a rear stator plate, the stator core is arranged between the outer stator housing and the inner stator housing, the front stator plate is arranged on a first end face of the outer stator housing, the rear stator plate is arranged on a second end face of the outer stator housing, the first cavity is defined by the outer stator housing, the outer side of the stator core, the front stator plate and the rear stator plate, and the second cavity is defined by the inner stator housing, the inner side of the stator core, the front stator plate and the rear stator plate.

In an embodiment of the present application, one or more of the liquid inlet, the liquid outlet, the liquid spray port and the liquid return port are arranged at the outer stator housing, the inner stator housing, the front stator plate or the rear stator plate.

In an embodiment of the present application, the number of the liquid spray port is more than one, and each of the more than one liquid spray port corresponds to a middle part of a corresponding stator unit of the stator units.

In an embodiment of the present application, the stator core is a segmented core.

With the cooling structure for a disc electric motor according to the present application, liquid refrigerant enters the liquid inlet channel from the liquid inlet, and enters the first cooling channel through the liquid spray port; the liquid refrigerant in the first cooling channel exchanges heat with the first coil and the second coil at the outer side of the stator core, and then enters the third cooling channel, then the liquid refrigerant exchanges heat with the first coil and the second coil on the stator unit corresponding to the third cooling channel, and enters the second cavity. The liquid refrigerant in the second cavity exchanges heat with the first coil and the second coil at the inner side of the stator core, and then enters the third cooling channel, then the liquid refrigerant exchanges heat with the first coil and the second coil on the stator unit corresponding to the third cooling channel, and enters the second cooling channel. The liquid refrigerant in the second cooling channel exchanges heat with the first coil and the second coil at the outer side of the stator core, then enters the liquid outlet channel through the liquid return port, and flows out from the liquid outlet. It can be seen that in the above process, the liquid refrigerant can fully and directly contact and exchange heat with core heat-generating parts such as the stator core, the first coil and the second coil, thereby improving the heat dissipation efficiency of the disc electric motor and prolonging the service life of the disc electric motor.

A cooling structure for a disc electric motor is further provided according to another embodiment of the present application. The cooling structure includes:
a stator core having multiple stator units;
a stator housing enclosing the stator core, where a first cavity is defined by the stator housing and an outer side of the stator core, a second cavity is defined by the stator housing and an inner side of the stator core, where the stator housing is provided with a liquid inlet channel, a liquid outlet channel, a liquid inlet, a liquid outlet, a liquid spray port and a liquid return port, where the liquid inlet and the liquid spray port are communicated through the liquid inlet channel, and the liquid outlet and the liquid return port are communicated through the liquid outlet channel;
a first baffle and a second baffle arranged between the outer side of the stator core and the stator housing, where the first baffle and the second baffle are configured to separate the first cavity into a first cooling channel and a second cooling channel, the first cooling channel is communicated with the liquid outlet, and the second cooling channel is communicated with the liquid return port;
multiple first coils and multiple second coils arranged on each of the multiple stator units, where the multiple first coils have a width different from that of the multiple second coils; and
a third baffle interposed between adjacent ones of the stator units, where a third cooling channel, through which the first cavity and the second cavity are communicated, is formed by the third baffle and a first coil and a second coil adjacent to each other.

In an embodiment of the present application, the first coils and the second coils are alternately arranged on each of the multiple stator units.

In an embodiment of the present application, the first coils have a width smaller than a width of the second coils.

In an embodiment of the present application, the third baffle abuts against second coils on stator units adjacent to the third baffle.

In an embodiment of the present application, the first baffle is arranged on a middle line of the liquid inlet and the liquid outlet.

In an embodiment of the present application, the second baffle is arranged on the middle line of the liquid inlet and the liquid outlet.

In an embodiment of the present application, the stator housing includes an outer stator housing, an inner stator housing, a front stator plate and a rear stator plate, the stator core is arranged between the outer stator housing and the inner stator housing, the front stator plate is arranged on a first end face of the outer stator housing, the rear stator plate is arranged on a second end face of the outer stator housing, the first cavity is defined by the outer stator housing, the outer side of the stator core, the front stator plate and the rear stator plate, and the second cavity is defined by the inner stator housing, the inner side of the stator core, the front stator plate and the rear stator plate.

In an embodiment of the present application, one or more of the liquid inlet, the liquid outlet, the liquid spray port and the liquid return port are arranged at the outer stator housing, the inner stator housing, the front stator plate or the rear stator plate.

In an embodiment of the present application, the number of the liquid spray port is more than one, and each of the more than one liquid spray port corresponds to a middle part of a corresponding stator unit of the stator units.

In an embodiment of the present application, the stator core is a segmented core.

With the cooling structure for a disc electric motor according to the present application, liquid refrigerant enters the liquid inlet channel from the liquid inlet, and enters the first cooling channel through the liquid spray port; the liquid refrigerant in the first cooling channel exchanges heat with the first coil and the second coil at the outer side of the stator core, and then enters the third cooling channel, then the liquid refrigerant exchanges heat with the first coil and the second coil on the stator unit corresponding to the third cooling channel, and enters the second cavity. The liquid refrigerant in the second cavity exchanges heat with the first coil and the second coil at the inner side of the stator core, and then enters the third cooling channel, then the liquid refrigerant exchanges heat with the first coil and the second coil on the stator unit corresponding to the third cooling channel, and enters the second cooling channel. The liquid refrigerant in the second cooling channel exchanges heat with the first coil and the second coil at the outer side of the stator core, then enters the liquid outlet channel through the liquid return port, and flows out from the liquid outlet. It can be seen that in the above process, the liquid refrigerant can fully and directly contact and exchange heat with core heat-generating parts such as the stator core, the first coil and the second coil, thereby improving the heat dissipation efficiency of the disc electric motor and prolonging the service life of the disc electric motor.

### BRIEF DESCRIPTION OF THE DRAWINGS

For more clearly illustrating technical solutions in embodiments of the present application or in the conventional technology, drawings used in the description of the embodiments or the conventional technology will be briefly described hereinafter. Apparently, the drawings in the following description illustrate only some embodiments of the present application. For those skilled in the art, other drawings may be obtained based on the provided drawings without any creative efforts.
FIG. 1 is a schematic three-dimensional structural diagram of a cooling structure for a disc electric motor according to an embodiment of the present application;
FIG. 2 is a partially enlarged schematic diagram of the cooling structure for a disc electric motor according to an embodiment of the present application;
FIG. 3 is a schematic exploded structural diagram of the cooling structure for a disc electric motor according to an embodiment of the present application;
FIG. 4 is a schematic diagram of a principle of the cooling structure for a disc electric motor according to an embodiment of the present application;
FIG. 5 is a schematic three-dimensional structural diagram of a cooling structure for a disc electric motor according to another embodiment of the present application;
FIG. 6 is a partially enlarged schematic diagram of the cooling structure for a disc electric motor according to another embodiment of the present application;
FIG. 7 is a schematic exploded structural diagram of the cooling structure for a disc electric motor according to another embodiment of the present application; and
FIG. 8 is a schematic diagram of a principle of the cooling structure for a disc electric motor according to another embodiment of the present application.

Reference numerals in the figures: 100a stator core, 200a stator housing, 300a first baffle, 400a second baffle, 500a first coil, 600a second coil, 700a partitioner, 800a first cavity, 900a second cavity, 101a stator unit, 201a liquid inlet, 202a liquid outlet, 203a liquid inlet channel, 204a liquid outlet channel, 205a liquid spray port, 206a liquid return port, 701a first partitioner, 702a second partitioner, 801a first cooling channel, 802a second cooling channel, 200-1a outer stator housing, 200-2a inner stator housing, 200-3a front stator plate, 200-4a rear stator plate;

100b stator core, 200b stator housing, 300b first baffle, 400b second baffle, 500b first coil, 600b second coil, 700b third baffle, 800b first cavity, 900b second cavity, 101b stator unit, 201b liquid inlet, 202b liquid outlet, 203b liquid inlet channel, 204b liquid outlet channel, 205b liquid spray port, 206b liquid return port, 801b first cooling channel, 802b second cooling channel, 200- 1b outer stator housing, 200- 2b inner stator housing, 200- 3b front stator plate, 200- 4b rear stator plate.

### DETAILED DESCRIPTION OF THE EMBODIMENTS

A core of the present application is to provide a cooling structure for a disc electric motor to prolong the service life of the disc electric motor.

In order to enable those skilled in the art to better understand technical solutions of the present application, the present application is further described in detail in conjunction with drawings and embodiments.

### First Embodiment

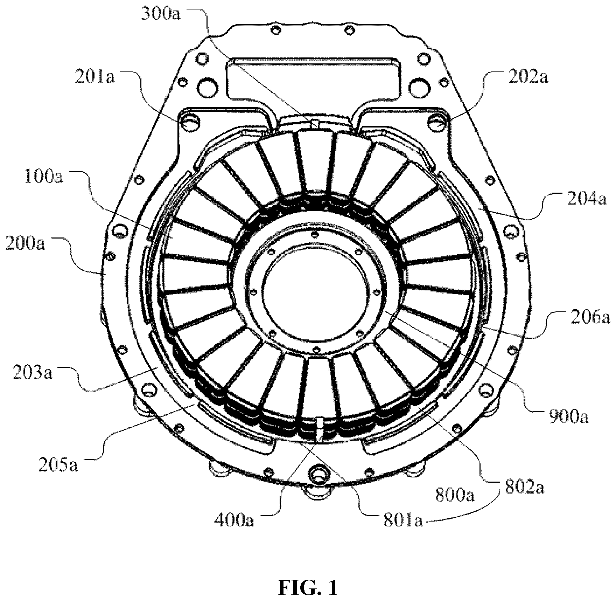

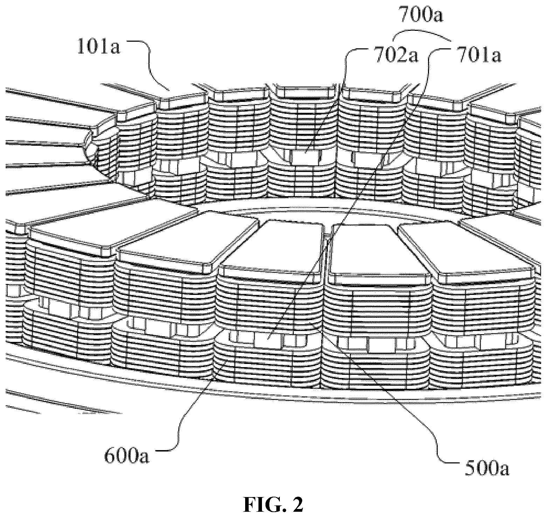

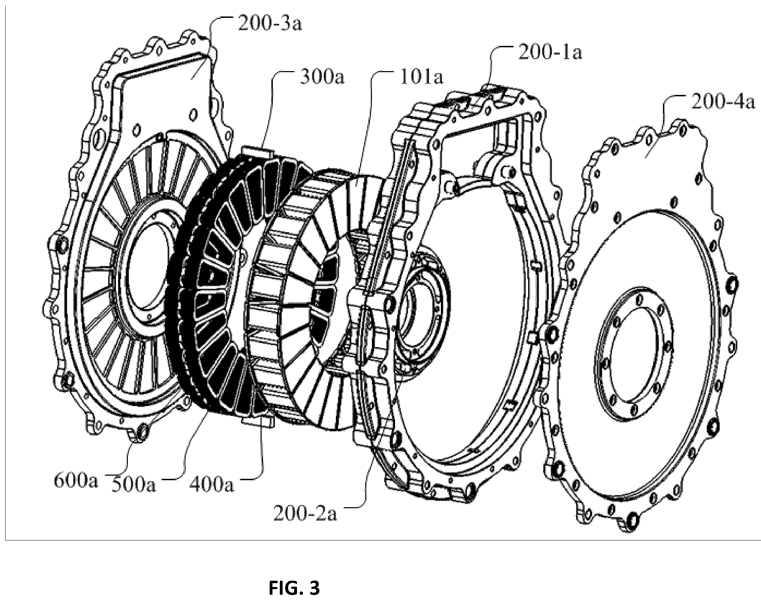

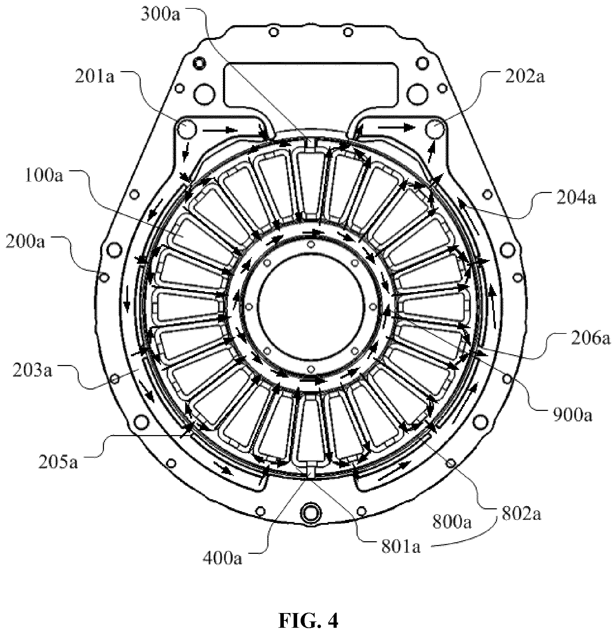

Referring to FIG. 1 to FIG. 4, a cooling structure for a disc electric motor according to the present application includes a stator core 100a, a stator housing 200a, a first baffle 300a, a second baffle 400a, a first coil 500a, a second coil 600a and a partitioner 700a. The stator core 100a has multiple stator units 101a; the stator housing 200a encloses the stator core 100a, a first cavity 800a is defined by the stator housing 200a and an outer side of the stator core 100a, and a second cavity 900a is defined by the stator housing 200a and an inner side of the stator core 100a. The stator housing 200a is provided with a liquid inlet channel 203a, a liquid outlet channel 204a, a liquid inlet 201a, a liquid outlet 202a, a liquid spray port 205a and a liquid return port 206a, the liquid inlet 201a and the liquid spray port 205a are communicated through the liquid inlet channel 203a, and the liquid outlet 202a and the liquid return port 206a are communicated through the liquid outlet channel 204a. The first baffle 300a and the second baffle 400a are arranged between the outer side of the stator core 100a and the stator housing 200a, the first baffle 300a and the second baffle 400a are configured to separate the first cavity 800a into a first cooling channel 801a and a second cooling channel 802a, the first cooling channel 801a is communicated with the liquid outlet 202a, and the second cooling channel 802a is communicated with the liquid return port 206a. The first coil 500a and the second coil 600a are arranged on each of the multiple stator units 101a, first coils 500a on adjacent ones of the stator units 101a are in a close fit with each other, and second coils 600a on the adjacent stator units 101a are in a close fit with each other. The partitioner 700a is interposed between the first coil 500a and the second coil 600a, and a third cooling channel, through which the first cavity 800a and the second cavity 900a are communicated, is formed between the adjacent stator units 101a.

With the cooling structure for a disc electric motor according to the present application, liquid refrigerant enters the liquid inlet channel 203a from the liquid inlet 201a, and enters the first cooling channel 801a through the liquid spray port; the liquid refrigerant in the first cooling channel 801a exchanges heat with the first coil 500a and the second coil 600a at the outer side of the stator core 100a, and then enters the third cooling channel, then the liquid refrigerant exchanges heat with the first coil 500a and the second coil 600a on the stator unit 101a corresponding to the third cooling channel, and enters the second cavity 900a. The liquid refrigerant in the second cavity 900a exchanges heat with the first coil 500a and the second coil 600a at the inner side of the stator core 100a, and then enters the third cooling channel, then the liquid refrigerant exchanges heat with the first coil 500a and the second coil 600a on the stator unit 101a corresponding to the third cooling channel, and enters the second cooling channel 802a. The liquid refrigerant in the second cooling channel 802a exchanges heat with the first coil 500a and the second coil 600a at the outer side of the stator core 100a, then enters the liquid outlet channel 204a through the liquid return port 206a, and flows out from the liquid outlet 202a. It can be seen that in the above process, the liquid refrigerant can fully and directly contact and exchange heat with core heat-generating parts such as the stator core 100a, the first coil 500a and the second coil 600a, thereby improving the heat dissipation efficiency of the disc electric motor and prolonging the service life of the disc electric motor.

The partitioner 700a is used to separate the first coil 500a from the second coil 600a, so that the third cooling channel is formed by the first coil 500a, the second coil 600a and the stator unit 101a, and the core heat-generating parts such as the stator unit 101a, the first coil 500a and the second coil 600a at the periphery of the third cooling channel are radiated through the third cooling channel. The thicknesses of the first coil 500a and the second coil 600a may be equal or different. In order to improve the cooling effect of the stator core 100a, the thicknesses of the first coil 500a and the second coil 600a are equal.

In order to reduce an occupied volume of the partitioner 700a, increase a sectional area of the third cooling channel, and increase contact areas of the stator unit 101a, the first coil 500a, and the second coil 600a with the third cooling channel, the partitioner 700a includes a first partitioner 701a and a second partitioner 702a. The first partitioner 701a is arranged at the outer side of the stator unit 101a, and the second partitioner 702a is arranged at the inner side of the stator unit 101a. The first partitioner 701a and the second partitioner 702a each has a cubic structure, and a structure that can separate the first coil 500a from the second coil 600a may be understood as the partitioner 700a.

The first partitioner 701a has a width greater than, equal to or smaller than the width of the outer side of the stator unit 101a, which falls within the protection scope of the present application, as long as the third cooling channel is formed between adjacent stator units 101a. In an embodiment, the first partitioner 701a has a width smaller than the width of the outer side of the stator unit 101a, which can not only reduce the material of the first partitioner 701a, but also increase the effective contact area between the stator unit 101a and the third cooling channel.

The first partitioner 701a is fixed on the first coil 500a and the second coil 600a, or the first partitioner 701a is fixed on the stator unit 101a. The first partitioner 701a may be fixed on the first coil 500a and the second coil 600a, or the stator unit 101a in a bonding manner.

The second partitioner 702a has a width greater than, equal to or smaller than the width of the inner side of the stator unit 101a, which falls within the protection scope of the present application, as long as the third cooling channel is formed between adjacent stator units 101a. In an embodiment, the second partitioner 702a has a width smaller than the width of the outer side of the stator unit 101a, which can not only reduce the material of the second partitioner 702a, but also increase the effective contact area between the stator unit 101a and the third cooling channel.

The second partitioner 702a is fixed on the first coil 500a and the second coil 600a, or the second partitioner 702a is fixed on the stator unit 101a. The second partitioner 702a may be fixed on the first coil 500a and the second coil 600a, or the stator unit 101a in a bonding manner.

It should be noted that the thickness and the width may be understood as follows, with the stator core 100a being taken as a whole for explanation, a length of the stator core 100a in an axial direction represents the thickness, and a length of the stator core 100a in a circumference direction represents the width, the thickness of the stator unit 101a is a distance between an upper end face and a lower end face of the stator unit 101a in the axial direction, and the width of the stator unit 101a is a distance between two side surfaces of the stator unit 101a. Since the stator unit 101a has a structure similar to a trapezoidal shape, a distance between two side surfaces, closer to an axis center of the stator core 100a, of the stator unit 101a is small, and a distance between two side surfaces, away from the axis center of the stator core 100a, of the stator unit 101a is large.

The stator housing 200a is used to mount the stator core 100a. The stator housing 200a includes an outer stator housing 200-1a, an inner stator housing 200-2a, a front stator plate 200-3a and a rear stator plate 200-4a. The stator core 100a is interposed between the outer stator housing and the inner stator housing 200-2a, the front stator plate 200-3a is arranged on a first end face of the outer stator housing 200-1a, the rear stator plate 200-4a is arranged on a second end face of the outer stator housing 200-1a, a first cavity 800a is defined by the outer stator housing 200-1a, the outer side of the stator core 100a, the front stator plate 200-3a and the rear stator plate 200-4a, and a second cavity 900a is defined by the inner stator housing 200-2a, the inner side of the stator core 100a, the front stator plate 200-3a and the rear stator plate 200-4a. The above is only one of structural forms of the stator housing 200a, and any structure that can enclose the stator core 100a may be used as the stator housing 200a, which is not described in detail here in the embodiment of the present application.

In the above structure, one or more of the liquid inlet 201a, the liquid outlet 202a, the liquid spray port 205a and the liquid return port 206a are arranged at the outer stator housing 200-1a, the inner stator housing 200-2a, the front stator plate 200-3a or the rear stator plate 200-4a. It can be understood here that the liquid inlet 201a, the liquid outlet 202a, the liquid spray port 205a and the liquid return port 206a may be all arranged at the outer stator housing 200-1a, or all arranged at the inner stator housing 200-2a, or all arranged at the front stator plate 200-3a, or all arranged at the rear stator plate 200-4a. Any two of the liquid inlet 201a, the liquid outlet 202a, the liquid spray port 205a and the liquid return port 206a may be arranged at the outer stator housing 200-1a, or arranged at the inner stator housing 200-2a, or arranged at the front stator plate 200-3a, or arranged at the rear stator plate 200-4a. Any three of the liquid inlet 201a, the liquid outlet 202a, the liquid spray port 205a and the liquid return port 206a may be arranged at the outer stator housing 200-1a, or arranged at the inner stator housing 200-2a, or arranged at the front stator plate 200-3a, or arranged at the rear stator plate 200-4a. Of course, the liquid inlet 201a, the liquid outlet 202a, the liquid spray port 205a and liquid return port 206a may be arranged across components, for example, a part of the liquid inlet channel 203a is arranged at the outer stator housing 200-1a, another part of the liquid inlet channel 203a is arranged at the front stator plate 200-3a, a part of the liquid outlet channel 204a is arranged at the outer stator housing 200-1a, and another part of the liquid outlet channel 204a is arranged at the front stator plate 200-3 a. In the figure, the liquid inlet 201a, the liquid outlet 202a, the liquid spray port 205a and the liquid return port 206a are all arranged at the outer stator housing 200-1a.

In an embodiment of the present application, the number of the liquid spray port 205a is more than one, each of the more than one liquid spray port 205a corresponds to a middle part of a corresponding stator unit 101a of the stator units 101a; or each of the more than one liquid spray port 205a corresponds to the third cooling channel. In order to prolong a time period in which the liquid refrigerant stays in the first cooling channel 801a, each liquid spray port 205a in the present application corresponds to a middle part of a corresponding stator unit 101a of the stator units 101a, as the liquid refrigerant enters the first cooling channel 801a through the liquid spray port 205a, the liquid refrigerant, under a relatively high pressure, is first sprayed onto the stator unit 101a, and then flows to two sides under the reflection of the stator unit 101a, thereby prolonging the time period in which the liquid refrigerant stays in the first cooling channel 801a and improving the efficiency of heat dissipation.

The stator core 100a is a segmented core or an integral core.

### Second Embodiment

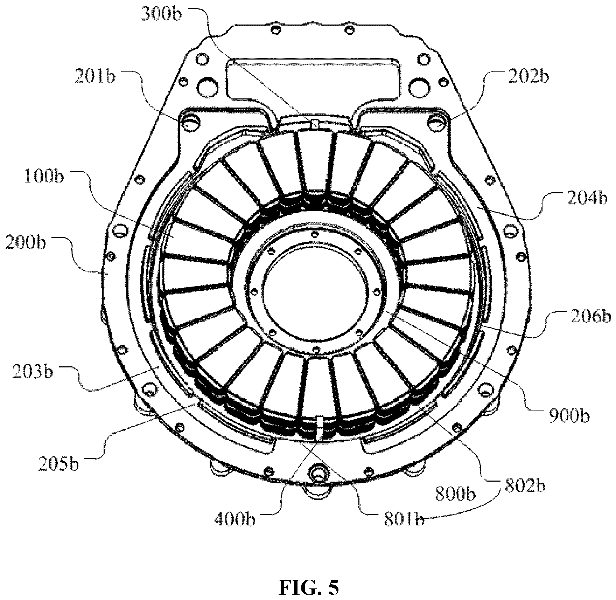

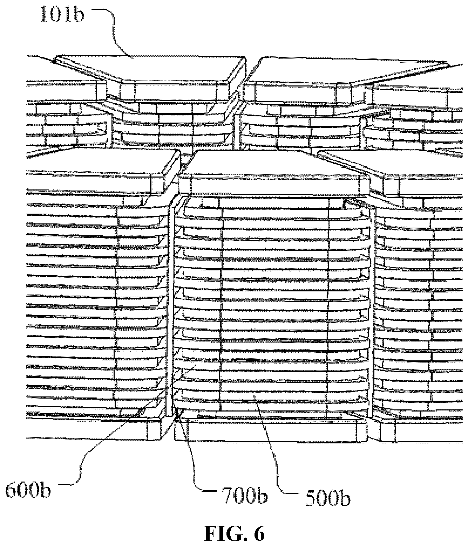

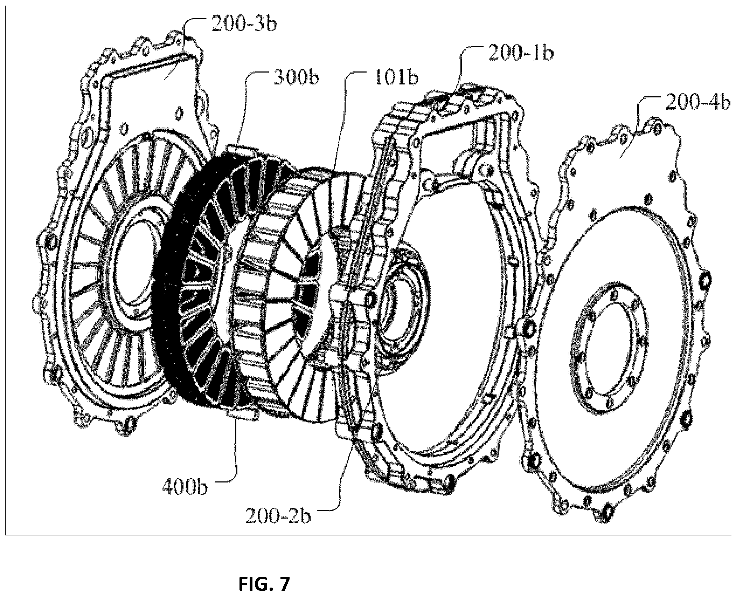

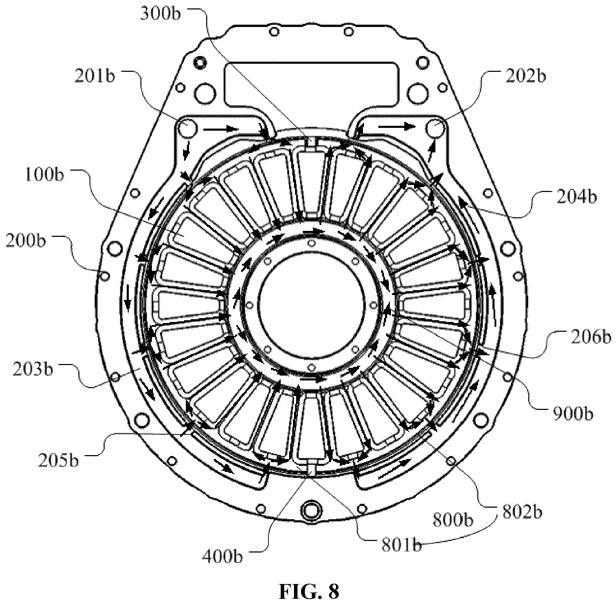

Referring to FIG. 5 to FIG. 8, a cooling structure for a disc electric motor according to the present application includes a stator core 100b, a stator housing 200b, a first baffle 300b, a second baffle 400b, a first coil 500b, a second coil 600b and a third baffle 700b. The stator core 100b has multiple stator units 101b; the stator housing 200b encloses the stator core 100b, a first cavity 800b is defined by the stator housing 200b and an outer side of the stator core 100b, and a second cavity 900b is defined by the stator housing 200b and an inner side of the stator core 100b. The stator housing 200b is provided with a liquid inlet channel 203b, a liquid outlet channel 204b, a liquid inlet 201b, a liquid outlet 202b, a liquid spray port 205b and a liquid return port 206b, the liquid inlet 201b and the liquid spray port 205b are communicated through the liquid inlet channel 203b, and the liquid outlet 202b and the liquid return port 206b are communicated through the liquid outlet channel 204b. The first baffle 300b and the second baffle 400b are arranged between the outer side of the stator core 100b and the stator housing 200b, the first baffle 300b and the second baffle 400b are configured to separate the first cavity 800b into a first cooling channel 801b and a second cooling channel 802b, the first cooling channel 801b is communicated with the liquid outlet 202b, and the second cooling channel 802b is communicated with the liquid return port 206b. The widths of the first coil 500b and the second coil 600b are different. Multiple first coils 500b and multiple second coils 600b are arranged on the stator unit 101b. The third baffle 700b is arranged between adjacent stator units 101b, and a third cooling channel, through which the first cavity 800b and the second cavity 900b are communicated, is formed by the third baffle 700b and a first coil 500b and a second coil 600b adjacent to each other.

With the cooling structure for a disc electric motor according to the present application, liquid refrigerant enters the liquid inlet channel 203b from the liquid inlet 201b, and enters the first cooling channel 801b through the liquid spray port; the liquid refrigerant in the first cooling channel 801b exchanges heat with the first coil 500b and the second coil 600b at the outer side of the stator core 100b, and then enters the third cooling channel, then the liquid refrigerant exchanges heat with the first coil 500b and the second coil 600b on the stator unit 101b corresponding to the third cooling channel, and enters the second cavity 900b. The liquid refrigerant in the second cavity 900b exchanges heat with the first coil 500b and the second coil 600b at the inner side of the stator core 100b, and then enters the third cooling channel, then the liquid refrigerant exchanges heat with the first coil 500b and the second coil 600b on the stator unit 101b corresponding to the third cooling channel, and enters the second cooling channel 802b. The liquid refrigerant in the second cooling channel 802b exchanges heat with the first coil 500b and the second coil 600b at the outer side of the stator core 100b, and then enters the liquid outlet channel 204b through the liquid return port 206b, and flows out from the liquid outlet 202b. It can be seen that in the above process, the liquid refrigerant can fully and directly contact and exchange heat with core heat-generating parts such as the stator core 100b, the first coil 500b and the second coil 600b, thereby improving the heat dissipation efficiency of the disc electric motor and prolonging the service life of the disc electric motor.

The third baffle 700b is used to define the third cooling channel together with the first coil 500b and the second coil 600b adjacent to each other, and the core heat-generating parts such as the stator unit 101b, the first coil 500b and the second coil 600b at the periphery of the third cooling channel are radiated through the third cooling channel. The widths of the first coil 500b and the second coil 600b are different. In an embodiment, the first coil 500b has a width smaller than the width of the second coil 600b.

In order to make the stator units generate uniform magnetic flux, multiple first coils 500b and multiple second coils 600b on each stator unit 101b are alternately arranged. That is, one of the two adjacent coils on each stator unit is the first coil 500b, and the other is the second coil 600b. In this way, the quantity of third cooling channels in two adjacent stator units 101b can be increased. Of course, the first coil and the second coil on each stator unit 101b may be arranged in a way that every two first coils 500b are spaced apart by multiple second coils 600b, which is not exemplified in the embodiment of the present application.

The third baffle 700b is interposed between adjacent stator units 101b. The third baffle 700b may abuts or not abut against the second coil 600b on the stator unit 101b adjacent to the third baffle 700b. Preferably, the third baffle 700b abuts against the second coil 600b on the stator unit 101b adjacent to the third baffle 700b, thereby ensuring the machining precision.

It should be noted that the width may be understood as follows, with the stator core 100b being taken as a whole for explanation, the length of the stator core 100b in an axial direction represents the thickness, and the length of the stator core 100b in a circumference direction represents the width, the thickness of the stator unit 101b is a distance between an upper end face and a lower end face of the stator unit 101b in the axial direction, and the width of the stator unit 101b is a distance between two side surfaces of the stator unit 101b. Since the stator unit 101b has a structure similar to a trapezoidal shape, a distance between two side surfaces, closer to an axis center of the stator core 100b, of the stator unit 101b is small, and a distance between two side surfaces, away from the axis center of the stator core 100b, of the stator unit 101b is large. For the coil arranged on the stator unit 101b, a distance between an outer surface of the coil and an inner surface of the coil is the width of the coil.

The lengths of the first cooling channel 801b and the second cooling channel 802b may be equal or different. In an embodiment of the present application, the length of the first cooling channel 801b is equal to the length of the second cooling channel 802b, the first baffle 400b is arranged on a middle line of the liquid inlet 201b and the liquid outlet 202b, and the second baffle 500b is arranged on the middle line of the liquid inlet 201b and the liquid outlet 202b. The above is only one arrangement of the first baffle 400b and the second baffle 500b. The first baffle 400b and the second baffle 500b may not be arranged on the middle line of the liquid inlet 201b and the liquid outlet 202b, and it can be understood that any structure which separates the first cavity 800b into the first cooling channel 801b and the second cooling channel 802b falls within the protection scope of the present application.

The stator housing 200b is used to mount the stator core 100b. The stator housing 200b includes an outer stator housing 200-1b, an inner stator housing 200-2b, a front stator plate 200-3b and a rear stator plate 200-4b. The stator core 100b is interposed between the outer stator housing and the inner stator housing 200-2b, the front stator plate 200-3b is arranged on a first end face of the outer stator housing 200-1b, the rear stator plate 200-4b is arranged on a second end face of the outer stator housing 200-1b, a first cavity 800b is defined by the outer stator housing 200-1b, the outer side of the stator core 100b, the front stator plate 200-3b and the rear stator plate 200-4b, and a second cavity 900b is defined by the inner stator housing 200-2b, the inner side of the stator core 100b, the front stator plate 200-3b and the rear stator plate 200-4b. The above is only one of structural forms of the stator housing 200b, and any structure that can enclose the stator core 100b may be used as the stator housing 200b, which is not described in detail here in the embodiment of the present application.

In the above structure, one or more of the liquid inlet 201b, the liquid outlet 202b, the liquid spray port 205b and the liquid return port 206b are arranged at the outer stator housing 200-1b, the inner stator housing 200-2b, the front stator plate 200-3b or the rear stator plate 200-4b. It can be understood here that the liquid inlet 201b, the liquid outlet 202b, the liquid spray port 205b and the liquid return port 206b may be all arranged at the outer stator housing 200-1b, or all arranged at the inner stator housing 200-2b, or all arranged at the front stator plate 200-3b, or all arranged at the rear stator plate 200- 4b. Any two of the liquid inlet 201b, the liquid outlet 202b, the liquid spray port 205b and the liquid return port 206b may be arranged at the outer stator housing 200-1b, or arranged at the inner stator housing 200-2b, or arranged at the front stator plate 200-3b, or arranged at the rear stator plate 200-4b. Any three of the liquid inlet 201b, the liquid outlet 202b, the liquid spray port 205b and the liquid return port 206b may be arranged at the outer stator housing 200-1b, or arranged at the inner stator housing 200-2b, or arranged at the front stator plate 200-3b, or arranged at the rear stator plate 200-4b. Of course, the liquid inlet 201b, the liquid outlet 202b, the liquid spray port 205b and liquid return port 206b may be arranged across components, for example, a part of the liquid inlet channel 203b is arranged at the outer stator housing 200-1b, another part of the liquid inlet channel 203b is arranged at the front stator plate 200-3b, a part of the liquid outlet channel 204b is arranged at the outer stator housing 200-1b, and another part of the liquid outlet channel 204b is arranged at the front stator plate 200-3b. In the figure, the liquid inlet 201b, the liquid outlet 202b, the liquid spray port 205b and the liquid return port 206b are all arranged at the outer stator housing 200-1b.

In an embodiment of the present application, the number of the liquid spray port 205b is more than one, each of the more than one liquid spray port 205b corresponds to a middle part of a corresponding stator unit 101b of the stator units 101b; or each of the more than one liquid spray port 205b corresponds to the third cooling channel. In order to prolong a time period in which the liquid refrigerant stays in the first cooling channel 801b, a liquid spray port 205b in the present application corresponds to a middle part of a corresponding stator unit 101b of the stator units 101b, as the liquid refrigerant enters the first cooling channel 801b through the liquid spray port 205b, the liquid refrigerant, under a relatively high pressure, is first sprayed onto the stator unit 101b, and then flows to two sides under the reflection of the stator unit 101b, thereby prolonging the time period in which the liquid refrigerant stays in the first cooling channel 801b and improving the efficiency of heat dissipation.

The stator core 100b is a segmented core or an integral core.

The above embodiments in the specification are described in a progressive manner. Each of the embodiments is mainly focused on the differences from other embodiments, and reference may be made among these embodiments with respect to the same or similar parts.

According to the above description of the disclosed embodiments, those skilled in the art can implement or practice the present application. Various modifications to these embodiments are apparent for those skilled in the art. The general principles defined herein may be implemented in other embodiments without departing from the spirit and scope of the present application. Therefore, the present application should not be limited to the embodiments disclosed herein, but has the widest scope in accordance to the principle and the novel features disclosed herein.

## Claims

1. A cooling structure for a disc electric motor, comprising:
a stator core having a plurality of stator units;
a stator housing enclosing the stator core, wherein a first cavity is defined by the stator housing and an outer side of the stator core, a second cavity is defined by the stator housing and an inner side of the stator core, wherein the stator housing is provided with a liquid inlet channel, a liquid outlet channel, a liquid inlet, a liquid outlet, a liquid spray port and a liquid return port, wherein the liquid inlet and the liquid spray port are communicated through the liquid inlet channel, and the liquid outlet and the liquid return port are communicated through the liquid outlet channel;
a first baffle and a second baffle arranged between the outer side of the stator core and the stator housing, wherein the first baffle and the second baffle separate the first cavity into a first cooling channel and a second cooling channel, the first cooling channel is communicated with the liquid outlet, and the second cooling channel is communicated with the liquid return port;
a first coil and a second coil arranged on each of the plurality of stator units, wherein first coils on adjacent ones of the stator units are in a close fit with each other, and second coils on the adjacent stator units are in a close fit with each other; and
a partitioner interposed between the first coil and the second coil, wherein a third cooling channel, through which the first cavity and the second cavity are communicated, is formed between the adjacent stator units.

2. The cooling structure for a disc electric motor according to claim 1, wherein the partitioner comprises a first partitioner and a second partitioner, the first partitioner is arranged at an outer side of the stator unit, and the second partitioner is arranged at an inner side of the stator unit.

3. The cooling structure for a disc electric motor according to claim 2, wherein the first partitioner has a width smaller than a width of the outer side of the stator unit.

4. The cooling structure for a disc electric motor according to claim 3, wherein the first partitioner is fixed on the first coil and the second coil.

5. The cooling structure for a disc electric motor according to claim 2, wherein the second partitioner has a width smaller than a width of the inner side of the stator unit.

6. The cooling structure for a disc electric motor according to claim 5, wherein the second partitioner is fixed on the first coil and the second coil.

7. The cooling structure for a disc electric motor according to claim 1, wherein the stator housing comprises an outer stator housing, an inner stator housing, a front stator plate and a rear stator plate, the stator core is arranged between the outer stator housing and the inner stator housing, the front stator plate is arranged on a first end face of the outer stator housing, the rear stator plate is arranged on a second end face of the outer stator housing, the first cavity is defined by the outer stator housing, the outer side of the stator core, the front stator plate and the rear stator plate, and the second cavity is defined by the inner stator housing, the inner side of the stator core, the front stator plate and the rear stator plate.

8. The cooling structure for a disc electric motor according to claim 7, wherein one or more of the liquid inlet, the liquid outlet, the liquid spray port and the liquid return port are arranged at the outer stator housing, the inner stator housing, the front stator plate or the rear stator plate.

9. The cooling structure for a disc electric motor according to claim 8, wherein the number of the liquid spray port is more than one, and each of the more than one liquid spray port corresponds to a middle part of a corresponding stator unit of the stator units.

10. The cooling structure for a disc electric motor according to any one of claims 1 to 9, wherein the stator core is a segmented core.

11. A cooling structure for a disc electric motor, comprising:
a stator core having a plurality of stator units;
a stator housing enclosing the stator core, wherein a first cavity is defined by the stator housing and an outer side of the stator core, a second cavity is defined by the stator housing and an inner side of the stator core, wherein the stator housing is provided with a liquid inlet channel, a liquid outlet channel, a liquid inlet, a liquid outlet, a liquid spray port and a liquid return port, wherein the liquid inlet and the liquid spray port are communicated through the liquid inlet channel, and the liquid outlet and the liquid return port are communicated through the liquid outlet channel;
a first baffle and a second baffle arranged between the outer side of the stator core and the stator housing, wherein the first baffle and the second baffle are configured to separate the first cavity into a first cooling channel and a second cooling channel, the first cooling channel is communicated with the liquid outlet, and the second cooling channel is communicated with the liquid return port;
a plurality of first coils and a plurality of second coils arranged on each of the plurality of stator units, wherein the first coils have a width different from a width of the second coils; and
a third baffle interposed between adjacent ones of the stator units, wherein a third cooling channel, through which the first cavity and the second cavity are communicated, is formed by the third baffle and a first coil and a second coil adjacent to each other.

12. The cooling structure for a disc electric motor according to claim 11, wherein the first coils and the second coils are alternately arranged on each of the plurality of stator units.

13. The cooling structure for a disc electric motor according to claim 12, wherein the first coils have a width smaller than a width of the second coils.

14. The cooling structure for a disc electric motor according to claim 13, wherein the third baffle abuts against second coils on stator units adjacent to the third baffle.

15. The cooling structure for a disc electric motor according to claim 11, wherein the first baffle is arranged on a middle line of the liquid inlet and the liquid outlet.

16. The cooling structure for a disc electric motor according to claim 15, wherein the second baffle is arranged on the middle line of the liquid inlet and the liquid outlet.

17. The cooling structure for a disc electric motor according to claim 11, wherein the stator housing comprises an outer stator housing, an inner stator housing, a front stator plate and a rear stator plate, the stator core is arranged between the outer stator housing and the inner stator housing, the front stator plate is arranged on a first end face of the outer stator housing, the rear stator plate is arranged on a second end face of the outer stator housing, the first cavity is defined by the outer stator housing, the outer side of the stator core, the front stator plate and the rear stator plate, and the second cavity is defined by the inner stator housing, the inner side of the stator core, the front stator plate and the rear stator plate.

18. The cooling structure for a disc electric motor according to claim 17, wherein one or more of the liquid inlet, the liquid outlet, the liquid spray port and the liquid return port are arranged at the outer stator housing, the inner stator housing, the front stator plate or the rear stator plate.

19. The cooling structure for a disc electric motor according to claim 18, wherein the number of the liquid spray port is more than one, and each of the more than one liquid spray port corresponds to a middle part of a corresponding stator unit of the stator units.

20. The cooling structure for a disc electric motor according to any one of claims 11 to 19, wherein the stator core is a segmented core.
